# FASCICULE DE BREVET EUROPEEN

(11) **EP 3 019 775 B1**
(45) Date de publication et mention de la délivrance du brevet: **19.08.2020**
(21) Numéro de dépôt: 14738550.4
(22) Date de dépôt: 10.06.2014
(51) Int. Cl.: F16H 57/025, B60K 17/04, F16H 57/02, F02F 7/00, F16H 57/023

(54) **GROUPE MOTOPROPULSEUR DE VEHICULE AVEC CARTER D'EMBRAYAGE OU DE CONVERTISSEUR POLYVALENT**
ANTRIEBSSTRANG FÜR EIN FAHRZEUG MIT EINEM GEHÄUSE FÜR EINE KUPPLUNG ODER MEHRWERTIGER WANDLER
POWER TRAIN FOR A VEHICLE HAVING A HOUSING FOR A CLUTCH OR POLYVALENT CONVERTER

(30) Priorité: 08.07.2013 FR 1356676
(43) Date de publication de la demande: 18.05.2016
(73) Titulaire: PSA Automobiles SA, 78300 Poissy (FR)
(72) Inventeur: BALENGHIEN, Olivier, 93340 Le Raincy (FR); PIERRE, David, 78440 Issou (FR)
(86) Numéro de dépôt international: PCT/FR2014/051396
(87) Numéro de publication internationale: WO 2015/004349

(56) Documents cités:
- EP-A1- 1 469 233
- US-A- 5 203 441
- US-A- 5 473 808
- US-A- 5 524 508

## Description

L'invention a trait au domaine des groupes motopropulseurs de véhicule automobile, plus particulièrement à l'interfaçage entre un moteur, notamment à combustion, et une boîte de vitesse, notamment du type manuelle, robotisée ou automatique.

La mise à disposition de plusieurs motorisations et de plusieurs transmissions pour un ou plusieurs modèles de véhicule impose de prévoir des interfaces entre les moteurs et les boîtes de vitesse qui sont spécifiques à chaque combinaison. Or la réalisation de ces interfaces n'est pas sans poser des problèmes de coût de production compte tenu de leur spécificité.

Plus précisément, le montage d'une boîte de vitesse sur un moteur impose une grande précision de concentricité entre le vilebrequin du moteur et l'arbre d'entrée de la boîte de vitesse, cette précision pouvant être de l'ordre de 0.2 mm. Pour ce faire, il est courant de prévoir deux goupilles ou pions de centrage disposés sur les surfaces périphériques de montage du carter de la boîte de vitesse et sur la surface correspondante du moteur. Des alésages sont alors usinés sur ces surfaces de manière à pouvoir recevoir ces goupilles de centrage. Elles sont alors insérées dans les alésages correspondants de l'une des deux surfaces et sont amenées en face des alésages correspondants de l'autre de ces deux surfaces lors de l'accostage. Leurs extrémités sont habituellement chanfreinées de manière à faciliter leur insertion dans les alésages et ainsi le centrage de la boîte de vitesse par rapport au moteur.

Ces goupilles et leurs alésages correspondants sont habituellement disposés de manière à être diamétralement opposés par rapport à l'axe du vilebrequin et de l'arbre d'entrée de la boîte de vitesse. Or en fonction de l'architecture des moteurs, un tel agencement n'est pas toujours possible. En effet, la face latérale de montage de la plupart des moteurs est constituée de deux carters, à savoir un carter principal, logeant les cylindres du moteur, et un carter secondaire inférieur servant notamment de réservoir d'huile. Dans certaines architectures de moteurs, ces carters peuvent ne pas être appairés. Dans ce cas, il n'est pas possible de positionner la boîte de vitesse par rapport à une goupille coopérant avec ce carter inférieur. Cela signifie qu'un carter d'interfaçage, tel qu'un carter d'embrayage (pour une boîte de vitesse manuelle ou robotisée) ou un carter de convertisseur de couple (pour une boîte de vitesse automatique), même si sa surface périphérique de montage sur le moteur est identique pour différentes architectures de moteur, doit toutefois présenter des positions de goupilles de centrage différentes en fonction de l'architecture du moteur. Cela signifie qu'un carter d'interfaçage spécifique pour chaque architecture doit être prévu.

Le document de brevet publié EP 0 926 399 A1 divulgue une transmission de motocyclette du type scooter dont le carter permet de réaliser deux configurations, plus précisément deux empattements. En effet, le carter, commun aux deux configurations, comprend quatre logements de paliers d'arbres de la transmission, dont un n'est pas exploité dans une première configuration mais bien dans une deuxième configuration. Un couvercle spécifique à chaque configuration coopère avec le carter. Cette construction de carter permet de réaliser deux configurations à moindre frais puisque le carter est commun. Cet enseignement est intéressant mais n'apporte toutefois pas de solution utile au problème de centrage au niveau de l'interface entre une famille de moteurs et une famille de boîtes de vitesse.

Le document de brevet publié FR 1 276 339 A divulgue, similairement à l'enseignement précédent, une transmission dont le carter est conçu pour permettre la réalisation de plusieurs configurations avec des couvercles spécifiques, tout en utilisant le même carter. Similairement au document précédent, cet enseignement n'apporte pas de solution au problème de centrage au niveau de l'interface entre une famille de moteurs et une famille de boîtes de vitesse.

Le document US 5 524 508 divulgue un carter d'interfaçage qui peut être utilisé rapidement pour remplacer un moteur à essence par un moteur diesel, puis pour coupler directement le moteur diesel à la transmission utilisée avec le moteur à essence. À cette fin, la paroi d'interface du carter est pourvu d'un schéma de trous comprenant quatorze alésages, dont deux sont des alésages de centrage et quatre des alésages taraudés. Z L'invention a pour objectif de proposer une solution au problème de centrage au niveau de l'interface entre une famille de moteurs et une famille de boîtes de vitesse. Plus particulièrement, l'invention a pour objectif de proposer une solution qui permet de rendre plus économique la réalisation des interfaces entre une famille de moteurs comprenant plusieurs architectures et une famille de boîtes de vitesse.

L'invention a pour objet un carter d'interfaçage entre un moteur à combustion et une boîte de vitesse, comprenant une surface périmétrique de montage sur le moteur à combustion, avec des moyens de fixation au moteur; un premier et un deuxième alésage de goupille de centrage du carter par rapport au moteur; remarquable en ce que la surface de montage comprend un troisième alésage de goupille de centrage, apte à être utilisé à la place du deuxième en fonction du type de moteur.

La surface périmétrique s'étend le long de la tranche de la paroi du carter. Elle ne forme pas nécessairement un contour fermé.

Selon un mode avantageux de l'invention, le carter comprend un alésage central d'arbre d'entrée de la boîte de vitesse, les deuxième et troisième alésages étant disposés sur un secteur, centré sur l'axe d'arbre d'entrée, de moins de 90°, préférentiellement de moins de 60°.

Selon un mode avantageux de l'invention, le deuxième alésage est diamétralement opposé au premier alésage par rapport à l'axe d'arbre d'entrée de la boîte de vitesse, et ce dans une plage de tolérance de ± 20°, le trosième alésage étant angulairement plus proche du premier alésage que ne l'est le deuxième.

Selon un mode avantageux de l'invention, le carter est un carter d'embrayage ou de convertisseur de couple, comprenant une autre surface périmétrique de montage destinée à recevoir un carter de boîte de vitesse. Cette autre surface de montage est opposée à celle destinée à coopérer avec le moteur.

L'invention a également pour objet un groupe motopropulseur de véhicule automobile, comprenant un moteur à combustion et une boîte de vitesse couplée au moteur à combustion, la boîte de vitesse comprenant un carter d'interfaçage entre le moteur et la boîte, remarquable en ce que le carter d'interfaçage est conforme à l'invention, le premier alésage de centrage du carter coopérant, via une première goupille, avec un premier alésage du moteur, l'un des deuxième et troisième alésages de centrage du carter coopérant, via une seconde goupille, avec un second alésage du moteur, l'autre des deuxième et troisième alésages de centrage étant inutilisé.

Selon un mode avantageux de l'invention, le premier alésage du moteur est situé sur une portion supérieure d'un carter principal du moteur et le deuxième alésage est situé sur une portion inférieure dudit carter, préférentiellement essentiellement à hauteur du vilebrequin, ou le deuxième alésage est situé sur un carter secondaire du moteur, formant un chapeau du palier de vilebrequin, préférentiellement à une hauteur intérieure au palier de vilebrequin.

L'invention a également pour objet un procédé de fabrication d'un carter d'interfaçage entre un moteur à combustion et une boîte de vitesse, le carter comprenant une surface périmétrique de montage sur le moteur à combustion, le procédé comprenant une étape d'usinage, sur la surface de montage, d'un premier et d'un deuxième alésage de goupille de centrage du carter par rapport au moteur; remarquable en ce que l'étape d'usinage des alésages de centrage comprend l'usinage d'un troisième alésage de goupille de centrage, le premier alésage étant configuré pour pouvoir coopérer avec un alésage correspondant dans une portion supérieure ou inférieure du moteur, le deuxième alésage étant configuré pour pouvoir coopérer avec un alésage correspondant dans une portion du moteur inférieure ou supérieure, respectivement, à l'axe du vilebrequin, et le troisième alésage étant configuré pour pouvoir coopérer avec un alésage correspondant dans une portion du moteur supérieure à celle du deuxième alésage et essentiellement à hauteur du vilebrequin.

Selon un mode avantageux de l'invention, le moteur à combustion peut être d'un premier type avec un carter principal logeant la totalité d'un palier de vilebrequin, ou d'un deuxième type avec un carter principal et un carter secondaire, inférieur au principal, et formant un chapeau de palier du vilebrequin ; le deuxième alésage étant apte à coopérer avec un alésage correspondant dans le carter secondaire inférieure d'un moteur du deuxième type et le troisième alésage étant apte à coopérer avec un alésage correspondant dans une portion inférieure du carter principal d'un moteur du premier type.

Selon un mode avantageux de l'invention, l'étape d'usinage des alésages de centrage comprend l'usinage d'un alésage de palier de l'arbre d'entrée de la boîte de vitesse.

Selon un mode avantageux de l'invention, l'usinage des premier, deuxième et troisième alésages de centrage est réalisé de manière simultanée lors de la même passe d'usinage.

Les caractéristiques sus mentionnées relatives au procédé sont également divulguées en relation avec le carter et/ou le groupe motopropulseur et, inversement, les caractéristiques relatives au carter et/ou au groupe motopropulseur sont également divulguées en relation avec le procédé.

Les mesures de l'invention sont intéressantes en ce qu'elles permettent de rendre les carters d'interfaçage compatibles avec plusieurs architectures de moteur sans devoir modifier les positions spécifiques des alésages de goupille de centrage des blocs moteurs. Il en résulte un avantage de coût de production important.

D'autres caractéristiques et avantages de la présente invention seront mieux compris à l'aide de la description et des dessins parmi lesquels :
- La figure 1 est une vue de face d'une première architecture de moteur à combustion, illustrant les positions des deux alésages de goupille de centrage ;
- La figure 2 est une vue de face d'une deuxième architecture de moteur à combustion, illustrant les positions des deux alésages de goupille de centrage ;
- La figure 3 est une vue de face d'un carter d'interfaçage d'une boîte de vitesse, conforme à l'invention et apte à être accouplé à chacun des moteurs des figures 1 et 2, illustrant les positions des alésages de goupille de centrage ;
- La figure 4 est une vue de face d'un premier carter d'embrayage conforme à l'invention ;
- La figure 5 est une vue de face d'un deuxième carter d'embrayage conforme à l'invention ;
- La figure 6 est une vue de face d'un carter de convertisseur de couple, conforme à l'invention ;
- La figure 7 est une vue de face d'un troisième carter d'embrayage conforme à l'invention.

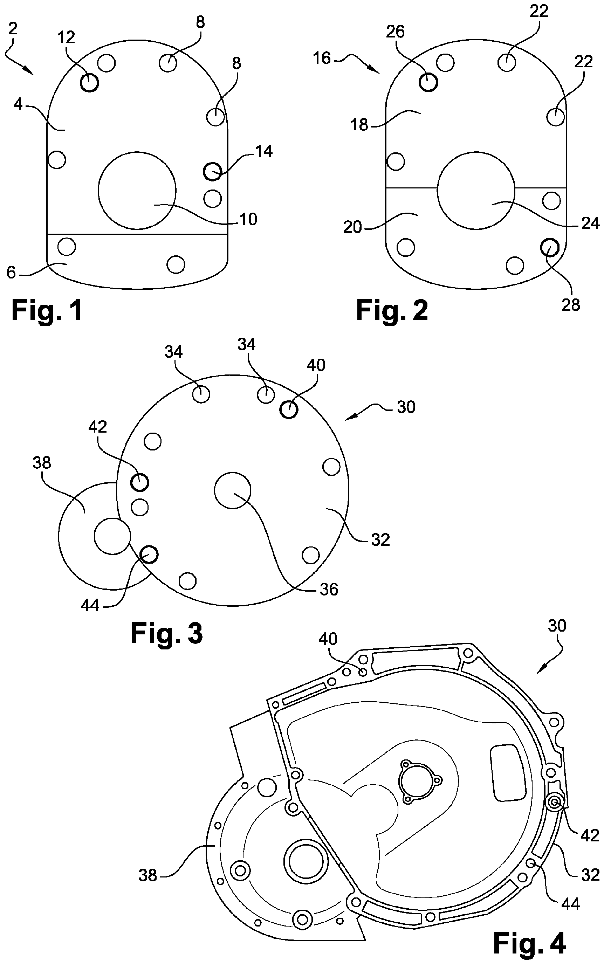

Les figures 1 et 2 illustrent deux types d'architecture de moteur avec lesquels est compatible le carter d'interfaçage illustré à la figure 3.

La figure 1 est une vue de face schématique d'un moteur à combustion d'un premier type. Le bloc moteur 2 est constitué, essentiellement, d'un carter principal 4 logeant les cylindres du moteur et d'un carter secondaire 6 en position inférieure, servant essentiellement de bac à huile. La face du bloc moteur 2 comprend une série d'orifices 8 destinés à recevoir des vis de fixation d'une boîte de vitesse. On peut observer que le palier du vilebrequin 10 est complètement formé dans le carter principal 4. La face du bloc moteur 2 comprend également deux alésages 12 et 14 destinés à coopérer avec des goupilles de centrage en vue du positionnement de la boîte de vitesse sur le bloc moteur. Le premier alésage 12 est situé sur une moitié supérieure du carter principal 4 alors que le deuxième alésage 14 est situé sur une moitié inférieure dudit carter, essentiellement à hauteur du vilebrequin 10.

La figure 2 est une vue de face schématique d'un moteur à combustion d'un deuxième type. Le bloc moteur 16 est constitué, essentiellement, d'un carter principal 18 logeant les cylindres du moteur et d'un carter secondaire 20, en position inférieure, formant les chapeaux des paliers du vilebrequin 24. Le carter secondaire 20 assure également une fonction de réservoir d'huile du moteur. Le fait qu'il forme les chapeaux de paliers fait que le carter secondaire 20 s'étend verticalement essentiellement jusqu'à l'axe du vilebrequin, c'est-à-dire sensiblement plus haut que le carter secondaire 6 du premier type de moteur de la figure 1. Similairement au bloc moteur 2 de la figure 1, le bloc moteur 16 de la figure 2 comprend deux alésages 26 et 28 destinés à recevoir des goupilles de centrage destinées au positionnement d'une boîte de vitesse. Comme cela est bien visible aux figures 1 et 2, le premier alésage 26 du bloc moteur 16 de la figure 2, situé sur une portion supérieure du carter principal, est situé à la même position que le premier alésage 12 du bloc moteur 2 de la figure 1. Le deuxième alésage 28, par contre, est situé plus bas, sur le carter secondaire 20, de manière à être essentiellement diamétralement opposé au premier alésage 26 par rapport à l'axe du vilebrequin, préférentiellement avec une tolérance de ± 20°, plus préférentiellement de ± 15°.

La figure 3 est une vue schématique du carter d'interfaçage entre le moteur et une boîte de vitesse. Il peut s'agir d'un carter d'embrayage ou d'un carter de convertisseur de couple. En effet, la boîte de vitesse comprend un carter de boîte de vitesse (non représenté) assemblé à un carter d'embrayage ou de convertisseur de couple en fonction que la boîte est une boîte manuelle ou automatique. Le carter de boîte de vitesse et le carter d'embrayage ou de convertisseur délimitent un volume intérieur dans lequel sont logés les éléments mécaniques de transmission. Le carter d'embrayage ou de convertisseur délimite également avec la face correspondante du bloc moteur (voir figures 1 et 2) un deuxième volume intérieur, habituellement de plus petite taille, dans lequel est logé le volant d'inertie du moteur et l'embrayage ou le convertisseur de couple.

On peut observer à la figure 3 que le carter 30 comprend une surface périphérique 32 de montage sur le bloc moteur. Cette surface 32 comprend une série d'orifices 34 destinés à coopérer avec des vis de fixation coopérant également avec les orifices 8 (figure 1) et 22 (figure 2) des blocs moteur 2 et 16, respectivement. Le carter 30 comprend également une portion de carter 38 de sortie de boîte vers les roues du véhicule. La surface de montage 32 comprend également trois alésages de goupille de centrage. Un premier alésage 40 est situé en position supérieure, apte à coopérer, via une goupille, avec l'un des alésages 12 (figure 1) et 26 (figure 2) des blocs moteurs 2 et 16, respectivement. Un deuxième alésage 44 est situé en position inférieure de manière à pouvoir coopérer avec l'alésage 28 du bloc moteur 16 (figure 2). Un troisième alésage 42 est situé en position intermédiaire de manière à pouvoir coopérer avec l'alésage 14 du bloc moteur 12 (figure 1).

Lors de l'assemblage du carter 30 au bloc moteur 2 du premier type (figure 1), seuls les premier et troisième alésages 40 et 42 sont utilités pour le centrage. Lors de l'assemblage du carter 30 au bloc moteur 16 (figure 2) du deuxième type, seuls les premier et deuxième alésages 40 et 44 sont utilisés pour le centrage. Le carter est ainsi réalisé avec trois alésages de manière à le rendre compatible avec les deux architectures de moteur illustrées aux figures 1 et 2.

Ces trois alésages 40, 42 et 44 sont préférentiellement réalisés simultanément dans la même passe d'usinage. Il est en effet important que ces alésages soient réalisés avec une grande précision compte tenu de leur rôle d'alignement des arbres de la boîte de vitesse et du moteur. La figure 3 montre par ailleurs un palier 36 d'arbre d'entrée de la boîte de vitesse. Ce palier peut également être usiné à l'occasion de l'usinage des alésages 40, 42 et 44, afin d'obtenir la précision d'alignement désirée.

Grâce à la présence des trois alésages sur le carter 30, les alésages initialement prévus sur les blocs moteurs peuvent être conservés. Il est en effet important de réaliser que les carters des blocs moteurs sont réalisés par fonderie, tout comme le carter d'interfaçage, et que la présence des alésages requiert des volumes de matière correspondants. Grâce au carter d'interfaçage de l'invention, seul le moule de fonderie dudit carter doit être adapté afin de prévoir les trois alésages, les moules de fonderie des carters des blocs moteurs restant inchangés.

La position du troisième alésage sur le carter 30 dépend de la position de l'alésage 14 correspondant sur le bloc moteur 2 (figure 1). Il est préférentiellement angulairement plus proche du premier alésage 40 que ne l'est le deuxième 44. Le troisième alésage est idéalement assez proche du deuxième dans la mesure où il est préférable qu'il soit le plus proche possible d'une position diamétralement opposée au premier, dans un souci de précision d'alignement des arbres. Ce souhait est toutefois limité par le carter principal 4 du bloc moteur 2 du premier type. Il n'est en effet pas envisagé de prévoir le troisième alésage sur le carter secondaire inférieur 6 compte tenu du fait qu'il n'est pas appairé au carter principal. Les deuxième et troisième alésages sont préférentiellement disposés sur un secteur, centré sur l'axe de l'alésage, de moins de 90°, préférentiellement ce moins de 60°.

Les goupilles de centrage sont bien connues en soi de l'homme de métier. Elles peuvent être sous forme de buselure, c'est-à-dire de portion de tube dont au moins une des extrémités, préférentiellement les deux extrémités sont chanfreinées en vue de faciliter leur insertion dans les alésages respectifs. Le diamètre extérieur des goupilles est précis de manière à pénétrer sans jeu dans les deux alésages correspondant. Elles ne sont préférentiellement pas traversées par une vis de fixation. Les goupilles ne doivent pas nécessairement être creuses ; elles peuvent en effet être des bouts d'axe pleins.

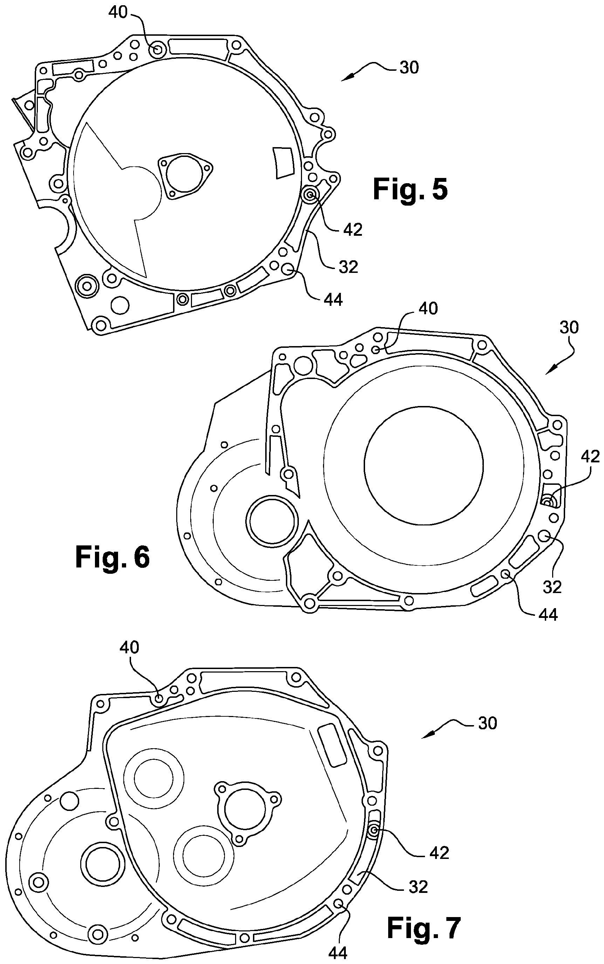

Les figures 4 à 7 sont des représentations de carters concrets conformes à l'invention. La disposition des trois alésages y est inversée suivant un plan de symétrie vertical. La figure 4 illustre un premier exemple de carter d'embrayage où on peut bien observer la présence des trois alésages de goupille de centrage. La figure 5 illustre un deuxième exemple de carter d'embrayage. La figure 6 illustre un exemple de carter de convertisseur de couple. La figure 7 illustre un troisième exemple de carter d'embrayage.

## Revendications

1. Carter d'interfaçage (30) entre un moteur à combustion (2 ; 16) et une boîte de vitesse, comprenant une surface périmétrique (32) de montage sur le moteur à combustion, avec
- des moyens de fixation (34) au moteur ;
- un premier et un deuxième alésage (40 ; 44) de goupille de centrage du carter par rapport au moteur ;
**caractérisé en ce que**
la surface de montage (32) comprend un troisième alésage (42) de goupille de centrage, apte à être utilisé à la place du deuxième (44) en fonction du type de moteur.

2. Carter (30) selon la revendication 1, **caractérisé en ce qu'**il comprend un alésage central (36) d'arbre d'entrée de la boîte de vitesse, les deuxième et troisième alésages (44 ; 42) étant disposés sur un secteur, centré sur l'axe d'arbre d'entrée, de moins de 90°, préférentiellement de moins de 60°.

3. Carter (30) selon l'une des revendications 1 et 2, **caractérisé en ce que** le deuxième alésage (44) est diamétralement opposé au premier alésage (40) par rapport à l'axe d'arbre d'entrée de la boîte de vitesse, et ce dans une plage de tolérance de ± 20°, le troisième alésage (42) étant angulairement plus proche du premier alésage que ne l'est le deuxième.

4. Carter (30) selon l'une des revendications 1 à 3, **caractérisé en ce qu'**il est un carter d'embrayage ou de convertisseur de couple, comprenant une autre surface périmétrique de montage destinée à recevoir un carter de boîte de vitesse.

5. Groupe motopropulseur de véhicule automobile, comprenant un moteur à combustion (2 ; 16) et une boîte de vitesse couplée au moteur à combustion, la boîte de vitesse comprenant un carter d'interfaçage (30) entre le moteur et la boîte, **caractérisé en ce que** le carter d'interfaçage (30) est conforme à l'une des revendications 1 à 4, le premier alésage (40) de centrage du carter coopérant, via une première goupille, avec un premier alésage (12 ; 26) du moteur, l'un des deuxième et troisième alésages (44 ; 42) de centrage du carter coopérant, via une seconde goupille, avec un second alésage (14 ; 28) du moteur, l'autre des deuxième et troisième alésages (44 ; 42) de centrage étant inutilisé.

6. Groupe motopropulseur selon la revendication 5, **caractérisé en ce que** le premier alésage (12 ; 16) du moteur est situé sur une portion supérieure d'un carter principal (4 ; 18) du moteur et le deuxième alésage (14) est situé sur une portion inférieure dudit carter (4), préférentiellement essentiellement à hauteur du vilebrequin, ou le deuxième alésage (28) est situé sur un carter secondaire (20) du moteur, formant un chapeau du palier de vilebrequin, préférentiellement à une hauteur intérieure au palier de vilebrequin (24).

7. Procédé de fabrication d'un carter d'interfaçage (30) entre un moteur à combustion (2 ; 16) et une boîte de vitesse, le carter comprenant une surface périmétrique (32) de montage sur le moteur à combustion, le procédé comprenant une étape d'usinage, sur la surface de montage (32), d'un premier et d'un deuxième alésage (40 ; 44) de goupille de centrage du carter (30) par rapport au moteur (2 ; 16) ;
**caractérisé en ce que**
l'étape d'usinage des alésages de centrage comprend l'usinage d'un troisième alésage (42) de goupille de centrage, le premier alésage (40) étant configuré pour pouvoir coopérer avec un alésage correspondant (12 ; 26) dans une portion supérieure du moteur, le deuxième alésage (44) étant configuré pour pouvoir coopérer avec un alésage correspondant (28) dans une portion du moteur (16), inférieure à l'axe du vilebrequin, et le troisième alésage (42) étant configuré pour pouvoir coopérer avec un alésage correspondant (14) dans une portion d'un autre moteur (2), supérieure à celle du deuxième alésage (44) et essentiellement à hauteur du vilebrequin.

8. Procédé selon la revendication 7, **caractérisé en ce que** le moteur à combustion peut être d'un premier type (2) avec un carter principal (4) formant la totalité d'un palier de vilebrequin (10), ou d'un deuxième type (16) avec un carter principal (18) et un carter secondaire (20), inférieur au principal, et formant un chapeau de palier du vilebrequin (24) ; le deuxième alésage (44) étant apte à coopérer avec un alésage correspondant (28) dans le carter secondaire inférieur (20) d'un moteur (16) du deuxième type et le troisième alésage (42) étant apte à coopérer avec un alésage correspondant (14) dans une portion inférieure du carter principal (4) d'un moteur (2) du premier type.

9. Procédé selon l'une des revendications 7 et 8, **caractérisé en ce que** l'étape d'usinage des alésages de centrage (40, 42, 44) comprend l'usinage d'un alésage de palier (36) de l'arbre d'entrée de la boîte de vitesse.

10. Procédé selon l'une des revendications 7 à 9, **caractérisé en ce que** l'usinage des premier, deuxième et troisième alésages de centrage (40 ; 44, 42) est réalisé de manière simultanée lors de la même passe d'usinage.

## Patentansprüche

1. Schnittstellengehäuse (30) zwischen einem Verbrennungsmotor (2; 16) und einem Getriebe, umfassend eine Umfangsfläche (32) zur Montage am Verbrennungsmotor, mit
- Befestigungsmittel (34) am Motor;
- eine erste und eine zweite Bohrung (40; 44) des Stifts zum Zentrieren des Gehäuses in Bezug auf den Motor;
**dadurch gekennzeichnet**
Die Montagefläche (32) umfasst eine dritte Bohrung (42) eines Zentrierstifts, die je nach Motortyp anstelle der zweiten (44) verwendet werden kann.

2. Gehäuse (30) nach Anspruch 1, **dadurch gekennzeichnet, dass** es eine zentrale Bohrung (36) der Eingangswelle des Getriebes umfasst, wobei die zweite und dritte Bohrung (44; 42) auf a angeordnet sind Sektor, zentriert auf der Achse der Eingangswelle, von weniger als 90 °, vorzugsweise weniger als 60 °

3. Gehäuse (30) nach einem der Ansprüche 1 und 2, **dadurch gekennzeichnet, dass** die zweite Bohrung (44) der ersten Bohrung (40) gegenüber der Achse der Eingangswelle des Kastens diametral gegenüberliegt Geschwindigkeit und innerhalb eines Toleranzbereichs von ± 20 °, wobei die dritte Bohrung (42) winkelmäßig näher an der ersten Bohrung liegt als die zweite.

4. Gehäuse (30) nach einem der Ansprüche 1 bis 3, **dadurch gekennzeichnet, dass** es sich um ein Kupplungsgehäuse oder einen Drehmomentwandler handelt, der eine andere Umfangsbefestigungsfläche zur Aufnahme eines Getriebegehäuses umfasst.

5. Kraftfahrzeugantriebsstrang, umfassend einen Verbrennungsmotor (2; 16) und ein mit dem Verbrennungsmotor gekoppeltes Getriebe, wobei das Getriebe ein charakterisiertes Schnittstellengehäuse (30) zwischen dem Motor und dem Getriebe umfasst, dass das Schnittstellengehäuse (30) einem der Ansprüche 1 bis 4 entspricht, wobei die erste Bohrung (40) zum Zentrieren des Gehäuses über einen ersten Stift mit einer ersten Bohrung (12; 26) der Motor, eine der zweiten und dritten Bohrungen (44; 42) zum Zentrieren des Gehäuses, die über einen zweiten Stift mit einer zweiten Bohrung (14; 28) des Motors zusammenwirken, die andere der zweiten und dritten Bohrung (44; 42)) der Zentrierung wird nicht verwendet.

6. Antriebsstrang nach Anspruch 5, **dadurch gekennzeichnet, dass** sich die erste Bohrung (12; 16) des Motors an einem oberen Abschnitt eines Hauptgehäuses (4; 18) des Motors befindet und sich die zweite Bohrung (14) befindet an einem unteren Abschnitt des Gehäuses (4), vorzugsweise im wesentlichen auf der Höhe der Kurbelwelle, oder die zweite Bohrung (28) befindet sich auf einem sekundären Gehäuse (20) des Motors und bildet eine Kappe des Kurbelwellenlagers, vorzugsweise in einer Höhe innerhalb des Kurbelwellenlager (24).

7. Verfahren zur Herstellung eines Schnittstellengehäuses (30) zwischen einem Verbrennungsmotor (2; 16) und einem Getriebe, wobei das Gehäuse eine Umfangsfläche (32) zur Montage am Verbrennungsmotor aufweist, das Verfahren umfassend einen Bearbeitungsschritt auf der Montagefläche (32) einer ersten und einer zweiten Bohrung (40; 44) eines Stifts zum Zentrieren des Gehäuses (30) relativ zum Motor (2; 16);
**dadurch gekennzeichnet**
Der Schritt der Bearbeitung der Zentrierbohrungen umfasst die Bearbeitung einer dritten Zentrierstiftbohrung (42), wobei die erste Bohrung (40) so konfiguriert ist, dass sie mit einer entsprechenden Bohrung (12; 26) in einem Abschnitt zusammenarbeiten kann Oberer Motor, wobei die zweite Bohrung (44) so konfiguriert ist, dass sie mit einer entsprechenden Bohrung (28) in einem Teil des Motors (16) zusammenarbeiten kann, der niedriger als die Achse der Kurbelwelle ist, und die dritte Bohrung (42) so konfiguriert ist, dass sie dazu in der Lage ist mit einer entsprechenden Bohrung (14) in einem Teil eines anderen Motors (2) zusammenarbeiten, der größer als der der zweiten Bohrung (44) und im Wesentlichen auf der Höhe der Kurbelwelle ist.

8. Verfahren nach Anspruch 7, **dadurch gekennzeichnet, dass** der Verbrennungsmotor von einem ersten Typ (2) mit einem Hauptgehäuse (4) sein kann, das das gesamte Kurbelwellenlager (10) bildet, oder von a zweiter Typ (16) mit einem Hauptgehäuse (18) und einem Nebengehäuse (20), die niedriger als das Hauptgehäuse sind und einen Lagerdeckel der Kurbelwelle (24) bilden; wobei die zweite Bohrung (44) mit einer entsprechenden Bohrung (28) im unteren Sekundärgehäuse (20) eines Motors (16) des zweiten Typs zusammenarbeiten kann und die dritte Bohrung (42) mit einer entsprechenden Bohrung zusammenarbeiten kann (14) in einem unteren Teil des Hauptgehäuses (4) eines Motors (2) des ersten Typs.

9. Verfahren nach einem der Ansprüche 7 und 8, **dadurch gekennzeichnet, dass** der Schritt der Bearbeitung der Zentrierbohrungen (40, 42, 44) die Bearbeitung einer Lagerbohrung (36) der Getriebeeingangswelle.

10. Verfahren nach einem der Ansprüche 7 bis 9, **dadurch gekennzeichnet, dass** die Bearbeitung der ersten, zweiten und dritten Zentrierbohrung (40; 44, 42) gleichzeitig während desselben Bearbeitungsdurchlaufs durchgeführt wird.

## Claims

1. Interface casing (30) between a combustion engine (2; 16) and a gearbox, comprising a perimeter surface (32) for mounting on the combustion engine, with
- fixing means (34) to the engine;
- a first and a second bore (40; 44) of the pin for centering the casing with respect to the motor;
**characterized in that**
the mounting surface (32) comprises a third bore (42) of centering pin, suitable for being used in place of the second (44) depending on the type of engine.

2. Casing (30) according to claim 1, **characterized in that** it comprises a central bore (36) of the input shaft of the gearbox, the second and third bores (44; 42) being arranged on a sector, centered on the input shaft axis, of less than 90 °, preferably less than 60°.

3. Casing (30) according to one of claims 1 and 2, **characterized in that** the second bore (44) is diametrically opposite the first bore (40) relative to the axis of the input shaft of the box speed, and within a tolerance range of ± 20 °, the third bore (42) being angularly closer to the first bore than is the second.

4. Casing (30) according to one of claims 1 to 3, **characterized in that** it is a clutch housing or torque converter, comprising another perimeter mounting surface for receiving a gearbox housing.

5. Motor vehicle powertrain, comprising a combustion engine (2; 16) and a gearbox coupled to the combustion engine, the gearbox comprising an interfacing casing (30) between the engine and the gearbox, **characterized in that** the interfacing casing (30) conforms to one of claims 1 to 4, the first bore (40) for centering the casing cooperating, via a first pin, with a first bore (12; 26) of the motor, one of the second and third bores (44; 42) for centering the casing cooperating, via a second pin, with a second bore (14; 28) of the motor, the other of the second and third bores (44; 42) of centering being unused.

6. Powertrain according to claim 5, **characterized in that** the first bore (12; 16) of the engine is located on an upper portion of a main casing (4; 18) of the engine and the second bore (14) is located on a lower portion of said casing (4), preferably essentially at the height of the crankshaft, or the second bore (28) is located on a secondary casing (20) of the engine, forming a cap of the crankshaft bearing, preferably at a height inside the crankshaft bearing (24).

7. Method for manufacturing an interfacing casing (30) between a combustion engine (2; 16) and a gearbox, the casing comprising a perimeter surface (32) for mounting on the combustion engine, the method comprising a step of machining, on the mounting surface (32), a first and a second bore (40; 44) of a pin for centering the casing (30) relative to the motor (2; 16);
**characterized in that**
the step of machining the centering bores comprises machining a third centering pin bore (42), the first bore (40) being configured to be able to cooperate with a corresponding bore (12; 26) in a portion upper of the engine, the second bore (44) being configured to be able to cooperate with a corresponding bore (28) in a portion of the engine (16), lower than the axis of the crankshaft, and the third bore (42) being configured to be able cooperate with a corresponding bore (14) in a portion of another engine (2), greater than that of the second bore (44) and essentially at the height of the crankshaft.

8. Method according to claim 7, **characterized in that** the combustion engine can be of a first type (2) with a main casing (4) forming the whole of a crankshaft bearing (10), or of a second type (16) with a main casing (18) and a secondary casing (20), lower than the main, and forming a bearing cap of the crankshaft (24); the second bore (44) being able to cooperate with a corresponding bore (28) in the lower secondary casing (20) of an engine (16) of the second type and the third bore (42) being able to cooperate with a corresponding bore (14) in a lower portion of the main casing (4) of an engine (2) of the first type.

9. Method according to one of claims 7 and 8, **characterized in that** the step of machining the centering bores (40, 42, 44) comprises the machining of a bearing bore (36) of the gearbox input shaft.

10. Method according to one of claims 7 to 9, **characterized in that** the machining of the first, second and third centering bores (40; 44, 42) is carried out simultaneously during the same machining pass.
